# EUROPÄISCHE PATENTSCHRIFT

(11) **EP 0 973 009 B1**
(45) Veröffentlichungstag und Bekanntmachung des Hinweises auf die Patenterteilung: **04.10.2006**
(21) Anmeldenummer: 99110620.4
(22) Anmeldetag: 02.06.1999
(51) Int. Cl.: G01B 7/30, G01P 15/00, B60T 8/00, B60T 8/24, H01R 13/66, B60D 1/62, B60T 7/20

(54) **Vorderwagen und Anhänger mit Verbindungsvorrichtung zwischen Vorderwagen und Anhänger zum Messen von Messgrössen des Vorderwagens und/oder Anhängers**
Vehicle and trailer with connecting device between vehicle and trailer for measuring parameters of the vehicle and/or trailer
Véhicule et remorque avec dispositif de connection entre le véhicule et la remorque pour mesurer des paramètres du vehicule et/ou de la remorque

(30) Priorität: 13.07.1998 DE 19831286
(43) Veröffentlichungstag der Anmeldung: 19.01.2000
(73) Patentinhaber: KNORR-BREMSE SYSTEME FÜR NUTZFAHRZEUGE GMBH, 80809 München (DE)
(72) Erfinder: Hecker, Falk, 71706 Markgroeningen (DE); Jundt, Oliver, 74354 Besigheim (DE)

(56) Entgegenhaltungen:
- EP-A- 0 435 086
- EP-A- 0 565 099
- EP-A- 0 625 697
- EP-A- 0 692 396
- GB-A- 2 210 342
- US-A- 4 760 371
- US-A- 5 397 924
- US-A- 5 488 352
- US-A- 5 677 667
- US-A- 5 814 771

## Beschreibung

### Stand der Technik

Die Erfindung befaßt sich mit einer Vorrichtung zur Erfassung von Meßgrößen eines Vorderwagens und/oder von Meßgrößen eines mit einem Vorderwagen, insbesondere einem Zugfahrzeug, in Wirkverbindung stehenden Anhängers bzw. Aufliegers.

In der DE 39 23 677 C2 ist ein Winkelsensor zur Erfassung des Winkels zwischen den Längsachsen eines Zugfahrzeugs und eines Anhängers beschrieben. Dieser Winkelsensor ist mit einem am Vorderwagen bzw. Zugfahrzeug angeordneten Potentiometer ausgestattet, dessen Betätigungswelle mit dem Anhänger koppelbar ist. Das Problem bei der Messung des Winkels zwischen dem Anhänger und dem Vorderwagen mit einem solchen konventionellen Potentiometer-Sensor liegt darin, daß dieser Sensor sowohl am Zugfahrzeug als auch am Auflieger bzw. Anhänger befestigt werden muß, daß die Befestigung bei jedem An- und Abkoppeln ebenfalls mit an- bzw. abgekoppelt werden muß und daß außerdem eine entsprechende Aufnahmevorrichtung am Auflieger bzw. Anhänger vorhanden sein muß, so daß sowohl das Zugfahrzeug als auch der Auflieger bzw. Anhänger zur Aufnahme des Winkelsensors umgerüstet werden muß. Aus diesem Grund ist diese Lösung umständlich und wenig praktikabel.

Die DE 41 14 921 C2 beschreibt einen in einem elektrischen Stecker mit mehreren Steckerstiften für ein Gerät integrierten Datenträger, der an von den Signale übertragenden Steckerstiften separaten Steckerstiften angeschlossen ist, und in dem Kenndaten des Geräts und der übertragenen Signale gespeichert sind.

Die DE 196 02 879 C1 zeigt ein Verfahren zum Erfassen der Gefahr des Umkippens eines Fahrzeuges. Hierzu wird ein relativ zur maximal möglichen Bremskraft geringer Bremseingriff eingeleitet, wenn die Querbeschleunigung einen Grenzwert überschreitet. Dieser Bremseingriff dient dazu, festzustellen, ob die Räder des Fahrzeuges vom Boden abheben. Wenn die Räder vom Boden abheben, dann greift das ABS-System, insbesondere das des Anhängers, ein. Aus diesem Grund wird überwacht, ob das ABS-System anspricht. Zur Überwachung wird die Stromversorgung am Stecker der Zugmaschine oder am ABS-Ventil gemessen. Zur Durchführung dieser Messung ist ein Meßgerät zur Strommessung an das Anhänger-ABS angeschlossen. Nachteilig an dieser Vorgehensweise ist, daß das Meßgerät zur Strommessung an das Anhänger-ABS angeschlossen ist. Dies führt dazu, daß ältere, d.h. bereits bestehende Anhänger, die noch nicht entsprechend ausgestattet sind, nachgerüstet werden müssen, was zu Mehrkosten für den Endkunden führen dürfte. Die DE 196 02 879 C1 enthält keinen Hinweis darauf, das Meßgerät in den Stecker der Zugmaschine zu integrieren, was dazu führen würde, daß lediglich bereits bestehende Zugmaschinen entsprechend auszustatten wären.

In der EP 0 625 697 A1 ist eine Einrichtung zur Messung des Gewichts von Anhängern einer Zugfahrzeug-Anhängerkombination beschrieben, bei welcher Sensoren am Anhänger achsnah angebracht sind und über separate Verkabelungen mit einer im Zugfahrzeug angeordneten Anzeigevorrichtung in Verbindung stehen. Bei der bekannten Messeinrichtung ergeben sich deshalb ebenfalls die eingangs erwähnten Nachteile des Stands der Technik, welche in einem zusätzlichen Aufwand zur Montage der Messeinrichtung bei einem Anhängerwechsel bzw. zum Nachrüsten des Anhängers bestehen.

Eine Aufgabe der Erfindung besteht darin, eine Vorrichtung zur Erfassung von Meßgrößen eines Vorderwagens, insbesondere eines Zugfahrzeuges, und/oder von Meßgrößen eines mit einem Vorderwagen in Wirkverbindung stehenden Anhängers bzw. Aufliegers zu schaffen, bei der für den Endkunden, mit Blick auf die dabei eingesetzte Sensorik, keine zusätzlichen bzw. allzu hohen Umrüstkosten entstehen. Insbesondere sollen mit Blick auf den Anhänger bzw. Auflieger keine zusätzlichen Umrüstkosten entstehen. Ferner sollen sämtliche vorkommenden Anhänger bzw. Auflieger, insbesondere die, die über ein Schlupfregelsystem verfügen, das zusätzliche Potential durch diese Sensoren ausnützen können.

Diese Aufgabe wird durch die Merkmale des Anspruchs 1 gelöst.

### Vorteile der Erfindung

Bei der erfindungsgemäßen Vorrichtung handelt es sich um eine Vorrichtung zur Erfassung von Meßgrößen eines Vorderwagens, insbesondere eines Zugfahrzeuges, und/oder von Meßgrößen eines mit dem Vorderwagen in Wirkverbindung stehenden Anhängers bzw. Aufliegers. Dabei soll außer einer Kopplungsvorrichtung zur Kraftübertragung zwischen dem Vorderwagen und dem Anhänger bzw. Auflieger, wenigstens eine Verbindungsvorrichtung vorhanden sein.

Die wenigstens eine Verbindungsvorrichtung besteht vorteilhafterweise aus einem Verbindungskabel oder aus einer Verbindungsleitung. Da eine aus einem Vorderwagen, d.h. Zugmaschine, und einem Anhänger bzw. Auflieger bestehende Fahrzeugkombination für gewöhnlich über Verbindungskabel bzw. Verbindungsleitungen verfügt, sind keine zusätzlichen Verbindungsvorrichtungen erforderlich, d.h. es kann auf die bereits an der Fahrzeugkombination vorhandene Verbindungsvorrichtungen zurückgegriffen werden.

Ausgehend von den bereits an einer Fahrzeugkombination vorhandenen Verbindungskabeln bieten sich verschiedene Möglichkeiten an. Bei dem Verbindungskabel kann es sich vorteilhafterweise um ein Verbindungskabel handeln,
- mit dem eine anhänger- bzw. aufliegerseitige Lichtanlage vom Vorderwagen aus mit Strom versorgt wird, oder
- mit dem eine anhänger- bzw. aufliegerseitige Steuereinrichtung mit Spannung versorgt wird, insbesondere handelt es sich hierbei um ein ABS-Verbindungskabel, oder
- welches eine vorderwagenseitige Steuereinrichtung mit einer anhänger- bzw. aufliegerseitigen Steuereinrichtung verbindet, insbesondere werden über dieses Verbindungskabel Daten zwischen den beiden Steuereinrichtungen ausgetauscht.

Bei der Verbindungsleitung handelt es sich um eine Verbindungsleitung zur Einbringung von Bremsmedium in die anhänger- bzw. aufliegerseitige Bremsanlage. Über diese Verbindungsleitung wird das Bremsmedium zu Bevorratungs- oder Steuerungszwecken in die anhänger- bzw. aufliegerseitige Bremsanlage eingebracht.

Die Verbindungsvorrichtung weist zumindest anhänger- bzw. aufliegerseitig eine Anbringungsvorrichtung zur Anbringung an den Anhänger bzw. Auflieger auf, mit der die Anbringung der Verbindungsvorrichtung an den Anhänger bzw. Auflieger reproduzierbar ist. Dies bedeutet, daß die Verbindungsvorrichtung am Anhänger bzw. Auflieger stets an der selben Stelle angebracht ist, bzw. relativ zum Anhänger bzw. Auflieger stets die selbe Position einnimmt. Hierzu besteht vorteilhafterweise in Bezug auf den Anhänger bzw. Auflieger nur eine einzige Möglichkeit der Anbringung. Dies wird beispielsweise dadurch erreicht, daß die Anbringungsvorrichtung dergestalt ausgebildet ist, daß sie eine Nase bzw. Ausformung aufweist. Dadurch gibt es lediglich eine Möglichkeit, die Anbringungsvorrichtung in das entsprechende Gegenstück, welches sich am Anhänger bzw. Auflieger befindet, einzuführen. Die anhänger- bzw. aufliegerseitige Anbringungsvorrichtung ist als Stecker oder als Buchse bzw. Kupplung ausgeführt.

Die Verbindungsvorrichtung weist ferner vorderwagenseitig eine Anbringungsvorrichtung zur Anbringung der Verbindungsvorrichtung an den Vorderwagen auf. Entsprechend der anhänger- bzw. aufliegerseitigen Anbringungsvorrichtung ist auch mit der vorderwagenseitigen Anbringungsvorrichtung die Anbringung an den Vorderwagen reproduzierbar. Auch in diesem Fall soll in Bezug auf den Vorderwagen nur eine einzige Möglichkeit der Anbringung bestehen. Entsprechend der anhänger- bzw. aufliegerseitigen Anbringungsvorrichtung ist auch die vorderwagenseitige Anbringungsvorrichtung als Stecker oder als Buchse bzw. als Kupplung ausgeführt.

Soll eine Fahrzeugkombination, die aus einem Vorderwagen und einem Anhänger bzw. Auflieger besteht, mit Hilfe einer entsprechenden Regelung stabilisiert werden, so sind hierfür im Normalfall sowohl Meßgrößen des Vorderwagens als auch Meßgrößen des Anhängers bzw. Aufliegers erforderlich. Als Beispiel für solch eine Regelung sei an dieser Stelle auf die in dem SAE-Paper 973284 "Vehicle dynamics control for commercial vehicles" beschriebene Regelung verwiesen.

Damit ein Besitzer bereits vorhandene Anhänger bzw. Auflieger nicht noch nachträglich umrüsten muß, ist gemäß der erfindungsgemäßen Vorrichtung wenigstens ein Erfassungsmittel zur Erfassung einer Meßgröße des Anhängers bzw. Aufliegers in die Verbindungsvorrichtung eingefügt. Aus entsprechendem Grund ist es auch von Vorteil, wenigstens ein Erfassungsmittel zur Erfassung einer Meßgröße des Vorderwagens in die Verbindungsvorrichtung einzufügen. Allerdings ist der Vorteil mit Blick auf den Umrüstungsaufwand bei den Anhängern. bzw. Aufliegern allein schon aufgrund der wesentlich größeren Anzahl von bereits vorhandenen Anhängern bzw. Aufliegern von größerer Bedeutung. Das Erfassungsmittel zur Erfassung einer Meßgröße des Vorderwagens wird nachfolgend als erstes Erfassungsmittel und das Erfassungsmittel zur Erfassung einer Meßgröße des Anhängers bzw. Aufliegers als zweites Erfassungsmittel bezeichnet.

Für den Anhänger bzw. Auflieger handelt es sich bei diesen Meßgrößen um das Bewegungsverhalten des Anhängers bzw. des Aufliegers beschreibende Größen, wie beispielsweise die Gierrate des Anhängers bzw. Aufliegers und/oder die auf den Anhänger bzw. Auflieger wirkende Querbeschleunigung. Auch kann es sich um den Knickwinkel, der sich zwischen den Längsachsen des Vorderwagens und dem Anhänger bzw. Auflieger einstellt, handeln.

Vor allem das zweite Erfassungsmittel wird deshalb in die Verbindungsvorrichtung eingefügt, da die Verbindungsvorrichtung bei Abkopplung des Anhängers bzw. des Aufliegers von dem Vorderwagen mit dem Vorderwagen verbunden bleibt. D.h. die Verbindungsvorrichtung verbleibt auch bei einem Wechsel des Anhängers bzw. Aufliegers am Vorderwagen. Demzufolge ist mit Blick auf den Anhänger bzw. Auflieger lediglich eine Nachrüstung des Vorderwagens und nicht des Anhängers bzw. Aufliegers erforderlich.

Damit mit dem zweiten Erfassungsmittel eine Meßgröße des Anhängers bzw. Aufliegers erfaßt werden kann, muß dieses dem Anhänger bzw. Auflieger funktionell zugeordnet sein. Aus diesem Grund ist das Erfassungsmittel in der anhänger- bzw. aufliegerseitigen Anbringungsvorrichtung eingefügt. Entsprechend ist das erste Erfassungsmittel dem Vorderwagen funktionell zugeordnet und demzufolge in der vorderwagenseitigen Anbringungsvorrichtung eingefügt.

Vorteilhafterweise handelt es sich bei dem zweiten Erfassungsmittel um einen Sensor zur Erfassung einer die Gierrate des Anhängers bzw. Aufliegers beschreibenden Größe und/oder um einen Sensor zur Erfassung einer die auf den Anhänger bzw. Auflieger wirkenden Querbeschleunigung beschreibenden Größe und/oder um einen Sensor zur Erfassung einer den zwischen Vorderwagen und Anhänger bzw. Auflieger auftretenden Knickwinkel beschreibenden Größe. Von besonderem Vorteil ist es, wenn in Abhängigkeit wenigstens einer der für den Anhänger bzw. Auflieger erfaßten Größen eine den zwischen Vorderwagen und Anhänger bzw. Auflieger auftretenden Knickwinkel beschreibende Größe ermittelt wird.

Von besonderem Vorteil ist es, wenn die mit den ersten bzw. zweiten Erfassungsmitteln erfaßten Signale bzw. Daten über einen CAN-Bus an eine Steuereinrichtung im Vorderwagen übertragen werden.

Zu Einstellungs- bzw. Justierzwecken ist es von Vorteil, wenn sowohl die anhänger- bzw. aufliegerseitige Anbringungsvorrichtung, als auch die vorderwagenseitige Anbringungsvorrichtung und/oder die darin eingefügten ersten bzw. zweiten Erfassungsmittel, Mittel zur horizontalen Ausrichtung der jeweiligen Erfassungsmittel aufweisen. Dadurch kann das Erfassungsmittel entsprechend optimal ausgerichtet werden.

Weitere Vorteile sowie vorteilhafte Ausgestaltungen können den Unteransprüchen entnommen werden.

Nachfolgend wird eine erfindungsgemäße Ausführungsform der Vorrichtung anhand der Zeichnung näher beschrieben.

### Zeichnung

Fig. 1 zeigt einen Vorderwagen 1 in Form eines Sattelzugfahrzeugs und einen auf dem Sattel des Vorderwagens 1 aufliegenden, vom Vorderwagen gezogenen, Sattelauflieger 2, wobei beide Fahrzeuglängsachsen in einer Richtung liegen. Details innerhalb des mit einem Kreis umrahmten Abschnitts X werden anhand der Fig. 2 erläutert.
In Fig. 2 ist deutlich zu erkennen, daß zwischen dem Vorderwagen 1 und dem Auflieger 2 Verbindungsvorrichtungen, bestehend aus den Komponenten 3, 6, 7 bzw. 11, 12, 13 angeordnet sind, die den Vorderwagen 1 mit dem Anhänger bzw. Auflieger 2 verbinden.

### Ausführungsbeispiel

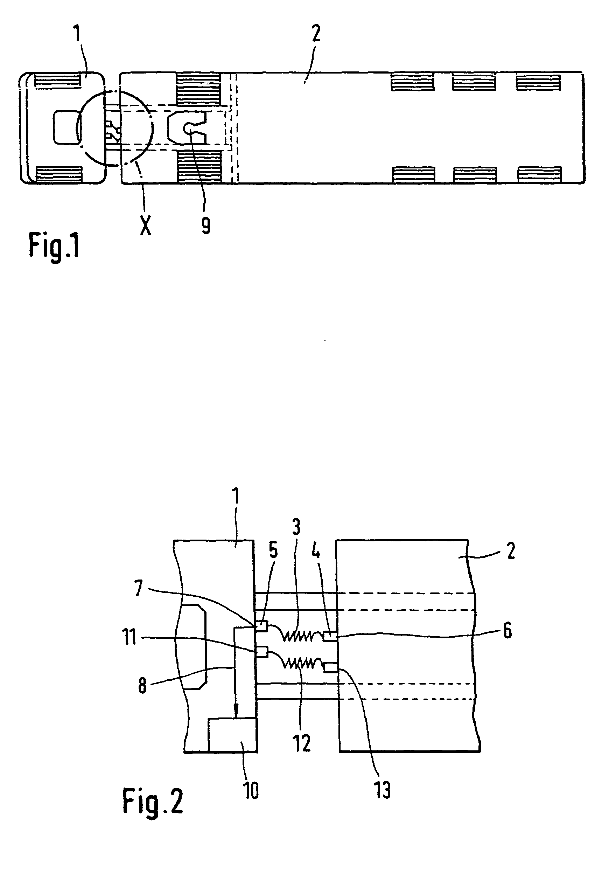

In Figur 1 ist eine Fahrzeugkombination, bestehend aus einem Vorderwagen 1, d.h. einer Zugmaschine, und einem Auflieger 2 dargestellt. Die in Figur 1 gewählte Darstellung soll keine einschränkende Wirkung haben, denkbar ist auch eine Fahrzeugkombination, die aus einem Vorderwagen und einem Anhänger, insbesondere einem Deichselanhänger, besteht. Der Auflieger 2 ist über eine Kopplungsvorrichtung 9, mit der eine Kraftübertragung zwischen dem Vorderwagen und dem Auflieger realisiert wird, mit dem Vorderwagen 1 verbunden.

In Figur 2 ist der in Figur 1 mit X gekennzeichnete Ausschnitt detaillierter dargestellt. Dabei sei angenommen, daß der Vorderwagen 1 eine Steuereinrichtung 10 aufweist. Bei dieser Steuereinrichtung 10 handelt es sich um eine Schlupfregeleinrichtung. Mit Hilfe dieser Schlupfregeleinrichtung soll der Brems- und/oder Antriebsschlupf des Vorderwagens geregelt werden. Bzgl. der Ausstattung des Aufliegers mit einer Steuereinrichtung sind verschiedene Alternativen denkbar. Zum einen ist es denkbar, daß der Auflieger keine Steuereinrichtung aufweist. Zum anderen kann der Auflieger eine Steuereinrichtung zur Regelung des Bremsschlupfes aufweisen. Auf die Darstellung einer möglichen Steuereinrichtung für den Auflieger wurde in Figur 1 der Übersichtlichkeit halber verzichtet.

Alternativ ist für die Fahrzeugkombination auch der Einsatz einer Steuereinrichtung, wie sie in dem bereits oben erwähnten SAE-Paper 973284 beschrieben ist, denkbar. Mit einer solchen Steuereinrichtung ist es möglich, die Fahrzeugkombination nicht nur längsdynamisch zu stabilisieren, sondern auch in Fahrzeugquerrichtung zu stabilisieren. Unter anderem wird mit einer solchen Steuereinrichtung der zwischen Vorderwagen und Anhänger bzw. Auflieger auftretende Knickwinkel zu Stabilisierungszwecken beeinflußt. Der Knickwinkel stellt die Abweichung der beiden Längsachsen, d.h. die Abweichung der Längsachse des Vorderwagens von der des Anhängers bzw. Aufliegers dar.

Sowohl in Figur 1 als auch in Figur 2 wurde auf die Darstellung der Bremsanlage, mit der die aus Vorderwagen und Anhänger bzw. Auflieger bestehende Fahrzeugkombination ausgestattet ist, verzichtet. An dieser Stelle sei jedoch festgehalten, daß es sich bei dieser Bremsanlage um eine pneumatische oder um eine elektropneumatische oder um eine elektromechanische Bremsanlage handeln kann. Ebenso ist der Einsatz einer hydraulischen oder einer elektrohydraulischen Bremsanlage denkbar. Der Aufbau bzw. die Wirkungsweise der jeweiligen Bremsanlage wird als bekannt vorausgesetzt und deshalb hier nicht weiter ausgeführt. Dem vorliegenden Ausführungsbeispiel soll eine pneumatische Bremsanlage zugrunde liegen. Dies soll die Möglichkeit der Verwendung der erfindungsgemäßen Vorrichtung bei anderen Bremsanlagen nicht einschränken.

In Figur 2 sind zwei Verbindungsvorrichtungen dargestellt. Die erste Verbindungsvorrichtung besteht aus einer vorderwagenseitigen Anbringungsvorrichtung 7, einem Verbindungskabel 3 und einer anhänger- bzw. aufliegerseitigen Anbringungsvorrichtung 6. Die zweite Verbindungsvorrichtung besteht aus einer vorderwagenseitigen Anbringungsvorrichtung 11, einer Verbindungsleitung 12 und einer anhänger- bzw. aufliegerseitigen Anbringungsvorrichtung 13. Die Darstellung von lediglich zwei Verbindungsvorrichtungen soll keine Einschränkung darstellen. Üblicherweise weist eine Fahrzeugkombination mehr als zwei Verbindungsvorrichtungen auf.

Bei dem Verbindungskabel handelt es sich um ein Verbindungskabel, mit dem eine anhänger- bzw. aufliegerseitige Lichtanlage vom Vorderwagen aus mit Strom versorgt wird. Oder es handelt sich um ein Verbindungskabel, mit dem eine anhänger- bzw. aufliegerseitige Steuereinrichtung, sofern der Anhänger bzw. Auflieger mit einer solchen ausgestattet ist, mit Spannung versorgt wird, insbesondere handelt es sich hierbei um ein ABS-Verbindungskabel. Mit der anhänger- bzw. aufliegerseitigen Steuereinrichtung der Bremsschlupf der Räder des Anhängers bzw. Aufliegers geregelt. Oder aber es handelt sich bei dem Verbindungskabel um ein Verbindungskabel, welches eine vorderwagenseitige Steuereinrichtung mit einer anhänger- bzw. aufliegerseitigen Steuereinrichtung, sofern der Anhänger bzw. Auflieger mit einer solchen ausgestattet ist, verbindet. Über dieses Verbindungskabel werden dann Daten zwischen den beiden Steuereinrichtungen ausgetauscht. Mit der vorderwagenseitigen Steuereinrichtung wird der Antriebs- und/oder Bremsschlupf der Räder des Vorderwagens und mit der anhänger- bzw. aufliegerseitigen Steuereinrichtung der Bremsschlupf der Räder des Anhängers bzw. Aufliegers geregelt.

Da dem Ausführungsbeispiel eine pneumatische Bremsanlage zugrunde liegen soll, handelt es sich bei der Verbindungsleitung um eine Verbindungsleitung zur Einbringung von Bremsmedium, insbesondere Druckluft, in die anhänger- bzw. aufliegerseitige Bremsanlage. Für gewöhnlich gibt es bei pneumatischen Bremsanlagen zwei Verbindungsleitungen. Eine Verbindungsleitung dient der Einbringung von Bremsmedium zu Bevorratungszwecken, d.h. das eingebrachte Bremsmedium wird einer Speichervorrichtung zugeführt. Eine andere Verbindungsleitung dient der Einbringung von Bremsmedium zu Steuerungszwecken, d.h. mit dem eingebrachten Bremsmedium werden zur Bremsanlage des Anhängers bzw. Aufliegers gehörende Ventile angesteuert.

Sowohl bei den vorderwagenseitigen Anbringungsvorrichtungen 7 und 11, als auch bei den anhänger- bzw. aufliegerseitigen Anbringungsvorrichtungen 6 und 13 können zum einen Stecker und zum anderen Buchsen bzw. Kupplungen zum Einsatz kommen. Unter Buchsen bzw. Kupplungen können auch sogenannte "Steckdosen" verstanden werden. Zur Verdeutlichung: Mit Stecker ist ein "männliches" und mit Buchse bzw. Kupplung ein "weibliches" Steckmittel gemeint. Auf jeden Fall müssen am Vorderwagen bzw. am Anhänger bzw. Auflieger zur Anbringung der Verbindungsvorrichtung, in Abhängigkeit der Ausführung der Anbringungsvorrichtungen der Verbindungsvorrichtung, entsprechende Gegenstücke vorhanden sein.

Gemäß Figur 2 ist in die anhänger- bzw. aufliegerseitige Anbringungsvorrichtung 6 ein Sensor 4 integriert, während ein weiterer Sensor 5 in die vorderwagenseitige Anbringungsvorrichtung 7 integriert ist. Mit dem Sensor 4 wird eine Meßgröße des Anhängers bzw. Aufliegers und mit dem Sensor 5 eine Meßgröße des Vorderwagens erfaßt. Ein CAN-Bus 8 überträgt die von den Sensoren 4, 5 erzeugten Signale an die im Vorderwagen 1 liegende Steuereinrichtung 10, die unter anderem zur Auswertung der Sensorsignale vorgesehen ist. Der CAN-Bus 8 soll auch in dem Verbindungskabel 3 verlaufen. Auf eine entsprechende Darstellung für die Verbindungsleitung 12 wurde in Figur 2 verzichtet.

Die Einfügung der Sensorik in die Anbringungsvorrichtungen, die dem Verbindungskabel 3 zugeordnet sind, soll keine Einschränkung darstellen. Die Sensorik kann durchaus auch in den Anbringungsvorrichtungen eingefügt sein, die der Verbindungsleitung 12 zugeordnet sind, bzw. sie kann auch auf die Anbringungsvorrichtungen der Verbindungsleitung bzw. des Verbindungskabel verteilt sein.

Sowohl die vorderwagenseitigen als auch die anhänger- bzw. aufliegerseitigen Anbringungsvorrichtungen sind so ausgebildet, daß sowohl die Anbringung der entsprechenden Verbindungsvorrichtung an den Anhänger bzw. Auflieger als auch an den Vorderwagen reproduzierbar ist. Dies bedeutet, daß die Verbindungsvorrichtung am Anhänger bzw. Auflieger bzw. am Vorderwagen stets an der selben Stelle angebracht ist, bzw. relativ zum Anhänger bzw. Auflieger bzw. Vorderwagen stets die selbe Position einnimmt. Sowohl in Bezug auf den Anhänger bzw. Auflieger als auch in Bezug auf den Vorderwagen besteht hierzu nur eine einzige Möglichkeit der Anbringung.

Sowohl die anhänger- bzw. aufliegerseitigen Anbringungsvorrichtungen 6, 13 als auch die vorderwagenseitigen Anbringungsvorrichtungen 7, 11 und auch die in ihnen eingefügten Sensoren 4, 5 können Mittel (in Figur 2 nicht gezeigt) zur horizontalen Ausrichtung der jeweiligen Erfassungsmittel, d.h. Sensoren, aufweisen.

Bei dem Sensor 4 kann es sich um einen Sensor zur Erfassung einer die Gierrate des Anhängers bzw. Aufliegers beschreibenden Größe und/oder um einen Sensor zur Erfassung einer die auf den Anhänger bzw. Auflieger wirkenden Querbeschleunigung beschreibenden Größe, und/oder um einen Sensor zur Erfassung einer den zwischen Vorderwagen und Anhänger bzw. Auflieger auftretenden Knickwinkel beschreibenden Größe handeln. Bzgl. der den Knickwinkel beschreibenden Größe sei festgehalten, daß auch folgende Alternative denkbar ist: In der Steuereinrichtung 10 wird in Abhängigkeit wenigstens einer der für den Anhänger bzw. Auflieger erfaßten Größen der zwischen Vorderwagen und Anhänger bzw. Auflieger auftretende Knickwinkel ermittelt.

Mit dem Erfassungsmittel bzw. Sensor 5 wird eine Meßgröße des Vorderwagens erfaßt, die das Bewegungsverhalten des Vorderwagens beschreibt.

Gemäß einer speziellen Ausführungsform ist das Verbindungskabel 3 als ABS-Verbindungskabel nach ISO-Norm 7638 ausgeführt. Auch die vorderwagenseitige und die anhänger- bzw. aufliegerseitige Anbringungsvorrichtung sind gemäß ISO-Norm 7638 als dieser Norm entsprechende Stecker ausgeführt. Somit lassen sich die Sensoren 4, 5 ohne Vergrößerung der Stecker 6,7 darin integrieren. Das ABS-Verbindungskabel ist für die erfindungsgemäß vorgeschlagene Integration der Sensoren 4, 5 gut geeignet, weil dieses Kabel 3 beim Wechsel des Aufliegers bzw. Anhängers 2 am Vorderwagen bzw. Zugfahrzeug 1 verbleibt, weil der zugehörige anhänger- bzw. aufliegerseitige Stecker relativ groß ist und außerdem über eine Klemmvorrichtung sehr stabil an der Steckdose des Aufliegers bzw. Anhängers 2 befestigt wird und weil die Sensorsignale über den CAN-Bus 8 an die Steuereinheit 10 übertragen werden können.

Insgesamt weist der erfindungsgemäße Vorschlag folgende Vorteile gegenüber einer direkten Montage der Sensoren am Auflieger auf:

Ausschließlich die Vorderwagen bzw. Zugfahrzeuge benötigen entsprechende Verbindungsvorrichtungen. D.h. es entstehen für die Endkunden bei der Beschaffung eines z.B. mit den durch die erfindungsgemäßen Sensoren ermöglichten Funktionen ausgestatteten Zugfahrzeugs keine zusätzlichen Umrüstkosten für die vorhandenen Auflieger bzw. Anhänger. Mit dem im ABS-Kabel laufenden CAN-Bus, über den die Sensorsignale übertragen werden, sind gleichzeitig sämtliche Auflieger, die über eine entsprechende ABS-Steckdose (in vertikaler Orientierung) verfügen, sensierbar, d.h., daß das zusätzliche Potential durch diese Sensoren mit nahezu jedem beliebigen Anhänger bzw. Auflieger ausgenutzt werden kann.

Die hier vorgeschlagene Integration von Sensoren in die anhänger- bzw. aufliegerseitigen Anbringungsvorrichtung ist aufgrund der Baugröße der zukünftig verfügbaren Sensoren, z.B. kombinierter mikromechanischer Gierraten- und Beschleunigungssensoren, ohne eine Vergrößerung der Anbringungsvorrichtung möglich.

Abschließend sei bemerkt, daß die in der Beschreibung gewählte Form des Ausführungsbeispiels sowie die in den Figuren gewählte Darstellung keine einschränkende Wirkung haben soll.

## Patentansprüche

1. Vorderwagen-Anhängerkombination bestehend aus einem Vorderwagen (1) oder Zugfahrzeug und wenigstens einem mit diesem gekoppelten Anhänger (2) oder Auflieger, wobei
a) außer einer Kopplungsvorrichtung (9) zur Kraftübertragung zwischen dem Vorderwagen (1) und dem Anhänger (2) oder Auflieger wenigstens eine Verbindungsvorrichtung (3, 6, 11, 12, 13) vorhanden ist, welche ein Verbindungskabel (3) oder eine Verbindungsleitung (12) sowie anhänger- oder aufliegerseitig eine Anbringungsvorrichtung (6, 13) zur Anbringung an den Anhänger oder Auflieger und/oder vorderwagenseitig eine Anbringungsvorrichtung (7, 11) zur Anbringung an den Vorderwagen (1) aufweist, wobei
b) mit dem Verbindungskabel (3) eine anhänger- oder aufliegerseitige Lichtanlage vom Vorderwagen (1) aus mit Strom oder eine anhänger- oder aufliegerseitige Steuereinrichtung mit Spannung versorgt wird, oder eine vorderwagenseitige Steuereinrichtung mit einer anhänger- oder aufliegerseitigen Steuereinrichtung zum Datenaustausch verbunden wird, bzw.
c) die Verbindungsleitung (12) zur Einbringung von Bremsmedium in die anhänger- oder aufliegerseitige Bremsanlage dient, und
d) eine Messvorrichtung zur Erfassung von Messgrößen des Vorderwagens (1) und/oder von Messgrößen des Anhängers oder Aufliegers vorhanden ist,
**dadurch gekennzeichnet, dass**
e) wenigstens ein erstes Erfassungsmittel (5) der Messvorrichtung zur Erfassung einer Messgröße des Vorderwagens (1) und/oder wenigstens ein zweites Erfassungsmittel (4) der Messvorrichtung zur Erfassung einer Messgröße des Anhängers (2) oder des Aufliegers in die Verbindungsvorrichtung (3, 6, 11, 12, 13) eingefügt ist.

2. Vorderwagen-Anhängerkombination nach Anspruch 1, **dadurch gekennzeichnet, dass** mit Hilfe der anhänger- oder aufliegerseitigen Anbringungsvorrichtung (6, 13) die Anbringung des Verbindungskabels (3) oder der Verbindungsleitung (12) an den Anhänger (2) oder Auflieger reproduzierbar ist.

3. Vorderwagen-Anhängerkombination nach Anspruch 2, **dadurch gekennzeichnet, dass** in Bezug auf den Anhänger (2) oder Auflieger nur eine einzige Möglichkeit der Anbringung besteht.

4. Vorderwagen-Anhängerkombination nach Anspruch 2 oder 3, **dadurch gekennzeichnet, dass** die anhänger- oder aufliegerseitige Anbringungsvorrichtung (6, 13) als Stecker oder als Buchse oder als Kupplung ausgeführt ist.

5. Vorderwagen-Anhängerkombination nach wenigstens einem der vorhergehenden Ansprüche, **dadurch gekennzeichnet, dass** mit Hilfe der vorderwagenseitigen Anbringungsvorrichtung (7, 11) die Anbringung des Verbindungskabels (3) oder der Verbindungsleitung (12) an den Vorderwagen (1) reproduzierbar ist.

6. Vorderwagen-Anhängerkombination nach Anspruch 5, **dadurch gekennzeichnet, dass** in Bezug auf den Vorderwagen (1) nur eine einzige Möglichkeit der Anbringung besteht.

7. Vorderwagen-Anhängerkombination nach Anspruch 5 oder 6, **dadurch gekennzeichnet, dass** die vorderwagenseitige Anbringungsvorrichtung (7, 11) als Stecker oder als Buchse oder als Kupplung ausgeführt ist.

8. Vorderwagen-Anhängerkombination nach wenigstens einem der vorhergehenden Ansprüche, **dadurch gekennzeichnet, dass** das erste Erfassungsmittel (5) dem Vorderwagen funktionell zugeordnet ist, und hierzu in der vorderwagenseitigen Anbringungsvorrichtung (7, 11) eingefügt ist, und/oder dass das zweite Erfassungsmittel (4) dem Anhänger bzw. Auflieger funktionell zugeordnet ist, und hierzu in der anhänger- bzw. aufliegerseitigen Anbringungsvorrichtung (6, 13) eingefügt ist.

9. Vorderwagen-Anhängerkombination nach wenigstens einem der vorhergehenden Ansprüche, **dadurch gekennzeichnet, dass** die Verbindungsvorrichtung (3, 6, 11, 12, 13) bei Abkopplung des Anhängers (2) oder des Aufliegers von dem Vorderwagen (1) mit dem Vorderwagen (1) verbunden bleibt.

10. Vorderwagen-Anhängerkombination nach wenigstens einem der vorhergehenden Ansprüche, **dadurch gekennzeichnet, dass** es sich bei dem zweiten Erfassungsmittel (4) um einen Sensor zur Erfassung einer die Gierrate des Anhängers (2) oder Aufliegers beschreibenden Größe, und/oder um einen Sensor zur Erfassung einer die auf den Anhänger (2) bzw. Auflieger wirkenden Querbeschleunigung beschreibenden Größe, und/oder um einen Sensor zur Erfassung einer den zwischen Vorderwagen (1) und Anhänger (2) bzw. Auflieger auftretenden Knickwinkel beschreibenden Größe handelt.

11. Vorderwagen-Anhängerkombination nach wenigstens einem der vorhergehenden Ansprüche, **dadurch gekennzeichnet, dass** die mit den ersten Erfassungsmitteln (5) bzw. mit den zweiten Erfassungsmitteln (4) erfassten Signale oder Daten über einen CAN-Bus (8) an eine Steuereinrichtung (10) im Vorderwagen (1) übertragen werden.

12. Vorderwagen-Anhängerkombination nach wenigstens einem der vorhergehenden Ansprüche, **dadurch gekennzeichnet, dass** sowohl die anhänger- oder aufliegerseitige Anbringungsvorrichtung (6, 13) als auch die vorderwagenseitige Anbringungsvorrichtung (7, 11) und/oder die darin eingefügten ersten Erfassungsmittel (5) bzw. zweiten Erfassungsmittel (4) Mittel zur horizontalen Ausrichtung der jeweiligen Erfassungsmittel (4, 5) aufweisen.

13. Vorderwagen-Anhängerkombination nach wenigstens einem der vorhergehenden Ansprüche, **dadurch gekennzeichnet, dass** es sich bei dem Verbindungskabel um ein ABS-Verbindungskabel handelt.

## Claims

1. Tractor vehicle/trailer combination consisting of a tractor vehicle (1) or tractor and at least one trailer (2) or semitrailer, wherein
(1) in addition to a coupling device (9) for the transmission of power between said tractor vehicle (1) and said trailer (2) or semitrailer, at least one connecting device (3, 6, 11, 12, 13) is provided which includes a connecting cable (3) or a connecting line (12) as well as an attachment device (6, 13) on the trailer side or semitrailer side for attachment to said trailer or semitrailer, and/or, on the tractor vehicle side, an attachment device (7, 11) for attachment to said tractor vehicle (1), wherein
(b) a light system on the trailer or semitrailer side is supplied with current or a controller means on the trailer or semitrailer side is supplied with voltage via said connecting cable (3) from said tractor vehicle, or a controller means on the tractor vehicle side is connected via said connecting cable to a controller means on the trailer or semitrailer side for data exchange or
(c) wherein, respectively, said connecting line (12) serves to supply some braking medium into the brake system on the trailer or semitrailer side, and
(d) a measuring device is provided for detecting measuring parameters of said tractor vehicle (1) and/or measuring parameters of said trailer or semitrailer,
**characterised in that**
(e) at least a first detection means (5) of said measuring device for the detection of a measuring parameter of said tractor vehicle (1) and/or at least one second detection means (4) of said measuring device for the detection of a measuring parameter of said trailer (2) or said semitrailer is inserted into said connecting device (3, 6, 11, 12, 13).

2. Tractor vehicle/trailer combination according to Claim 1, **characterised in that** the attachment of said connecting cable (3) or said connecting line (12) on said trailer (2) or semitrailer is reproducible by means of said attachment device (6, 13) on the trailer or semitrailer side.

3. Tractor vehicle/trailer combination according to Claim 2, **characterised in that** only a single possibility of attachment is provided with respect to said trailer (2) or semitrailer.

4. Tractor vehicle/trailer combination according to Claim 2 or 3, **characterised in that** said attachment device (6, 13) on the trailer or semitrailer side is configured in the form of a plug or a socket or as a coupler.

5. Tractor vehicle/trailer combination according to any of the preceding Claims, **characterised in that** the attachment of said connecting cable (3) or said connecting line (12) on said tractor vehicle (1) is reproducible by means of said attachment device (7, 11) on the tractor vehicle side.

6. Tractor vehicle/trailer combination according to Claim 5, **characterised in that** only a single possibility of attachment is provided with respect to said tractor vehicle (1).

7. Tractor vehicle/trailer combination according to Claim 5 or 6, **characterised in that** said attachment device (7, 11) on the tractor vehicle side is configured in the form of a plug or a socket or as a coupler.

8. Tractor vehicle/trailer combination according to at least one of the preceding Claims, **characterised in that** said first detection means (5) is functionally associated with said tractor vehicle, and inserted to this end into said attachment device (7, 11) on the tractor vehicle side, and/or that said second detection means (4) is functionally associated with said trailer or semitrailer, respectively, and inserted to this end into said attachment device (6, 13) on the trailer or semitrailer side, respectively.

9. Tractor vehicle/trailer combination according to at least one of the preceding Claims, **characterised in that** said connecting device (3, 6, 11, 12, 13) remains connected to said tractor vehicle (1) when said trailer (2) or said semitrailer is decoupled from said tractor vehicle (1).

10. Tractor vehicle/trailer combination according to at least one of the preceding Claims, **characterised in that** said second detection means (4) is a sensor for the detection of a parameter descriptive of the yaw rate of said trailer (2) or semitrailer, and/or a sensor for the detection of a parameter descriptive of transverse acceleration acting upon said trailer (2) or semitrailer, respectively, and/or a sensor for the detection of a parameter descriptive of the knick angle occurring between said tractor vehicle (1) and said trailer (2) or semitrailer, respectively.

11. Tractor vehicle/trailer combination according to at least one of the preceding Claims, **characterised in that** the signals or data detected by means of said first detection means (5) or said second detection means (4), respectively, are transmitted via a CAN bus (8) to a controller means (10) in said tractor vehicle (1).

12. Tractor vehicle/trailer combination according to at least one of the preceding Claims, **characterised in that** both said attachment device (6, 13) on said trailer or semitrailer side and said attachment device (7, 11) on said tractor vehicle side and/or said first detection means (5) or said second detection means (4), respectively, which are inserted therein, include means for the horizontal alignment of the respective detection means (4, 5).

13. Tractor vehicle/trailer combination according to at least one of the preceding Claims, **characterised in that** said connecting cable is an ABS connecting cable.

## Revendications

1. Combinaison d'un véhicule de tête et de remorques constituée d'un véhicule (1) de tête ou véhicule de traction et d'au moins une remorque (2) ou semi-remorque couplée à celui-ci,
a) étant présent, outre un dispositif (9) de couplage pour la transmission entre le véhicule (1) de tête et la remorque (2) ou semi-remorque, au moins un dispositif (3, 6, 11, 12, 13) de connexion qui comporte un câble (3) de connexion ou une ligne (12) de connexion ainsi que, du côté de la remorque ou semi-remorque, un dispositif (6, 13) de rattachement pour le rattachement à la remorque ou semi-remorque et/ou du côté du véhicule de tête, un dispositif (7, 11) de rattachement pour le rattachement au véhicule (1) de tête,
b) par le câble (3) de connexion, une installation d'éclairage située du côté de la remorque ou semi-remorque étant alimentée en courant depuis le véhicule (1) de tête, ou un dispositif de commande situé du côté de la remorque ou semi-remorque étant alimenté en tension, ou un dispositif de commande situé du côté du véhicule de tête étant relié à un dispositif de commande situé du côté de la remorque ou semi-remorque pour l'échange de données, et/ou
c) la ligne (12) de connexion servant à l'introduction de fluide de freinage dans l'installation de freinage située du côté de la remorque ou semi-remorque, et
d) un dispositif de mesure pour détecter des grandeurs de mesures du véhicule (1) de tête et/ou des grandeurs de mesures de la remorque ou semi-remorque étant présent,
**caractérisée en ce que**
e) il est inséré dans le dispositif (3, 16, 11, 12, 13) de connexion au moins un premier moyen (5) de détection du dispositif de mesure pour détecter une grandeur de mesure du véhicule (1) de tête et/ou au moins un deuxième moyen (4) de détection du dispositif de mesure pour détecter une grandeur de mesure de la remorque (2) ou de la semi-remorque.

2. Combinaison d'un véhicule de tête et de remorques suivant la revendication 1, **caractérisée en ce que** le rattachement du câble (3) de connexion ou de la ligne (12) de connexion à la remorque (2) ou semi-remorque peut être reproduite à l'aide du dispositif (6, 13) de rattachement situé du côté de la remorque ou semi-remorque.

3. Combinaison d'un véhicule de tête et de remorques suivant la revendication 2, **caractérisée en ce qu'**il n'existe qu'une seule possibilité de rattachement par rapport à la remorque (2) ou semi-remorque.

4. Combinaison d'un véhicule de tête et de remorques suivant la revendication 2 ou 3, **caractérisée en ce que** le dispositif (6, 13) de rattachement situé du côté de la remorque ou semi-remorque est réalisé en connecteur ou en douille ou en accouplement.

5. Combinaison d'un véhicule de tête et de remorques suivant au moins l'une des revendications précédentes, **caractérisée en ce que** le rattachement du câble (3) de connexion ou de la ligne (12) de connexion au véhicule (1) de tête peut être reproduit à l'aide du dispositif (7, 11) de rattachement situé du côté du véhicule de tête.

6. Combinaison d'un véhicule de tête et de remorques suivant la revendication 5, **caractérisée en ce qu'**il n'existe qu'une seule possibilité de rattachement par rapport au véhicule (1) de tête.

7. Combinaison d'un véhicule de tête et de remorques suivant la revendication 5 ou 6, **caractérisée en ce que** le dispositif (7, 11) de rattachement situé du côté du véhicule de tête est réalisé en connecteur ou en douille ou en accouplement.

8. Combinaison d'un véhicule de tête et de remorques suivant au moins l'une des revendications précédentes, **caractérisée en ce que** le premier moyen (5) de détection est associé du point de vue fonctionnel au véhicule de tête et, à cet effet, est inséré dans le dispositif (7, 11) de rattachement situé du côté du véhicule de tête, et/ou **en ce que** le deuxième moyen (4) de détection est associé du point de vue fonctionnel à la remorque ou semi-remorque et, à cet effet, est inséré dans le dispositif (6, 13) de rattachement situé du côté de la remorque ou semi-remorque.

9. combinaison d'un véhicule de tête et de remorques suivant au moins l'une des revendications précédentes, **caractérisée en ce que** le dispositif (3, 6, 11, 12, 13) de connexion reste connecté au véhicule (1) de tête lors du découplage de la remorque (2) ou semi-remorque du véhicule (1) de tête.

10. Combinaison d'un véhicule de tête et de remorques suivant au moins l'une des revendications précédentes, **caractérisée en ce que** le premier moyen (4) de détection est un capteur pour détecter une grandeur décrivant l'embardée de la remorque (2) ou semi-remorque, et/ou un capteur pour détecter une grandeur décrivant l'accélération transversale agissant sur la remorque (2) semi-remorque et/ou un capteur pour détecter une grandeur décrivant l'angle de courbure apparaissant entre le véhicule (1) de tête et la remorque (2) ou semi-remorque.

11. Combinaison d'un véhicule de tête et de remorques suivant au moins l'une des revendications précédentes, **caractérisée en ce que** les signaux ou données détectés par les premiers moyens (5) de détection et/ou par les deuxièmes moyens (4) de détection sont transmis par l'intermédiaire d'un bus (8) CAN à un dispositif (10) de commande dans le véhicule (1) de tête.

12. Combinaison d'un véhicule de tête et de remorques suivant au moins l'une des revendications précédentes, **caractérisée en ce que** tant le dispositif (6, 13) de rattachement situé du côté de la remorque ou semi-remorque que le dispositif (7, 11) de rattachement situé du côté du véhicule de tête et/ou les premiers moyens (5) de détection et/ou les deuxièmes moyens (4) de détection qui y sont insérés comportent des moyens pour orienter horizontalement les moyens (4, 5) de détection associés.

13. Combinaison d'un véhicule de tête et de remorques suivant au moins l'une des revendications précédentes, **caractérisée en ce que** le câble de connexion est un câble de connexion ABS.
